# EUROPÄISCHE PATENTSCHRIFT

(11) **EP 2 619 504 B1**
(45) Veröffentlichungstag und Bekanntmachung des Hinweises auf die Patenterteilung: **19.08.2015**
(21) Anmeldenummer: 11757833.6
(22) Anmeldetag: 12.09.2011
(51) Int. Cl.: F23N 1/00, F16K 1/00, F16K 27/02, F16K 31/08

(54) **AUFBAU EINER GASVENTILEINHEIT**
STRUCTURE OF A GAS-VALVE UNIT
STRUCTURE D'UN ENSEMBLE DE VANNES À GAZ

(30) Priorität: 20.09.2010 EP 10290501
(43) Veröffentlichungstag der Anmeldung: 31.07.2013
(73) Patentinhaber: BSH Hausgeräte GmbH, 81739 München (DE)
(72) Erfinder: NAUMANN, Jörn, 77770 Durbach (DE)
(86) Internationale Anmeldenummer: PCT/EP2011/065734
(87) Internationale Veröffentlichungsnummer: WO 2012/038287

(56) Entgegenhaltungen:
- DE-A1- 10 249 938
- DE-C1- 3 634 349
- JP-A- 53 012 528
- JP-U- 58 142 457
- JP-U- H02 150 471

## Beschreibung

Die Erfindung betrifft eine Gasventileinheit zum Einstellen eines einem Gasbrenner eines Gasgeräts, insbesondere eines Gaskochgeräts, zugeführten Gasvolumenstroms, wobei die Gasventileinheit einen Ventilkörper und eine aus dem Ventilkörper herausstehende Betätigungswelle aufweist, in welchem Ventilkörper mindestens zwei Auf-Zu-Ventile der Gasventileinheit ausgebildet sind, und in welchem Ventilkörper mindestens zwei Drosselstellen mit jeweils mindestens einer Drosselöffnung ausgebildet sind.

Gasventileinheiten der genannten Art sind in den nachveröffentlichten Patentanmeldungen PCT/EP2010/060173, PCT/EP2010/060176 und PCT/EP2010/060179 beschrieben. Bei dem Einsatz der Gasventileinheiten in Gaskochgeräten werden die Gasventileinheiten - abhängig von der Konfiguration des Gaskochgeräts, von der Art der am Installationsort vorhandenen Gasversorgung und von länderspezifischen Normvorgaben - in Kombination mit unterschiedlichen Gasbrennern und mit unterschiedlichen Gasarten, wie Erdgas, Flüssiggas oder Stadtgas, sowie mit unterschiedlichen Gasdrücken betrieben. Für jede in der Praxis vorkommende Kombination aus Gasbrenner, Gasart und Gasdruck sind die Querschnitte der Drosselöffnungen der Gasventileinheit individuell einzustellen, sodass der Gasbrenner in jeder Schaltstufe der Gasventileinheit mit der gewünschten Leistung brennt.

Die JP 58-142457 U beschreibt eine Gasventileinheit für einen Gasbrenner. Die Gasventileinheit weist einen Ventilkörper und eine aus dem Ventilkörper herausstehende Betätigungswelle auf. Der Ventilkörper weist eine Drosselplatte auf, die von der Seite des Ventilkörpers aus, auf der die Betätigungswelle aus dem Ventilkörper heraus steht, zugänglich ist.

Der vorliegenden Erfindung liegt daher die Aufgabe zugrunde, eine Gasventileinheit zur Verfügung zu stellen, bei der in einfache Weise ein Anpassen der Öffnungsquerschnitte der Drosselöffnungen ermöglicht ist.

Diese Aufgabe wird erfindungsgemäß dadurch gelöst, dass der Ventilkörper mindestens eine Drosselplatte aufweist, in der die Drosselöffnungen der Drosselstellen angeordnet sind und die Drosselplatte von der Seite des Ventilkörpers aus, auf der die Betätigungswelle aus dem Ventilkörper heraussteht, zugänglich ist. Der Ventilkörper weist mehrere parallel zueinander angeordnete Platten auf, wobei eine der Platten von der Drosselplatte gebildet ist, und wobei eine der Platten von einer Ventildichtplatte gebildet ist, welche die Ventilsitze der Auf-Zu-Ventile bildet. Damit ist von außen ein Zugriff auf die Drosselplatte möglich. Der Zugang zur Drosselplatte erfolgt dabei von der Seite des Ventilkörpers aus, auf der auch die Betätigungswelle angeordnet ist. Wenn die Gasventileinheit in eine Gaskochmulde eingebaut ist, ist dies in der Regel die Oberseite der Gaskochmulde. Um auf die Drosselplatte zugreifen zu können, ist dann die Abdeckplatte - auch Top-Sheet genannt - der Gaskochmulde abzunehmen. Bei der Betätigungswelle handelt es sich vorzugsweise um eine drehbare Welle. Die Gasventileinheit wird dabei durch Drehen der Betätigungswelle betätigt. Ebenfalls möglich ist es, die Betätigungswelle nicht drehbar, sondern linear verschiebbar anzuordnen. In diesem Fall erfolgt die Betätigung der Gasventileinheit durch Verschieben der Betätigungswelle in Richtung senkrecht zur Wellenachse.

Mit besonderem Vorteil ist die Drosselplatte austauschbar. Die Drosselplatte kann dabei vollständig aus dem Ventilkörper der Gasventileinheit entnommen und durch eine andere Drosselplatte ausgetauscht werden. Dies ist beispielsweise erforderlich, wenn eine Gaskochstelle auf eine andere Gassorte umgebaut wird.

Zweckmäßigerweise weist der Ventilkörper auf der Seite des Ventilkörpers, auf der die Betätigungswelle aus dem Ventilkörper heraussteht, eine Abdeckung auf, und ist die Drosselplatte durch Entfernen der Abdeckung zugänglich. Die Abdeckung schließt den Ventilkörper zu der Seite, auf der die Betätigungswelle angeordnet ist, ab. Um auf die Drosselplatte zugreifen zu können, ist die Abdeckung zu entfernen.

Die Platten des Ventilkörpers weisen Ausnehmungen oder Durchbrüche auf, die in Abhängigkeit davon, welches der Auf-Zu-Ventile geöffnet ist, von Gas durchströmt werden oder nicht.

Hierbei ist eine der Platten von einer Ventildichtplatte gebildet, welche die Ventilsitze der Auf-Zu-Ventile bildet, wobei die Ventildichtplatte aus einem flexiblen Material ausgeführt ist. Im Bereich jedes Ventilsitzes besitzt die Ventildichtplatte jeweils eine Öffnung, durch die bei geöffnetem Auf-Zu-Ventil Gas strömt. Wenn das Auf-Zu-Ventil geschlossen ist, sitzt ein Ventilkörper des Auf-Zu-Ventils auf der Ventildichtplatte auf und verschließt die zugehörige Öffnung.

Somit weist die Ventildichtplatte im Bereich jedes Ventils eine Öffnung auf, welche bei geschlossenem Auf-Zu-Ventil mittels eines auf der Ventildichtplatte aufsitzenden Absperrkörpers des Auf-Zu-Ventils verschlossen ist.

Mit besonderem Vorteil weist die Gasventileinheit einen Permanentmagnet auf, mittels welchem die Auf-Zu-Ventile betätigbar sind. Insbesondere sind die Absperrkörper der Auf-Zu-Ventile mittels der Kraft mindestens eines Permanentmagnets bewegbar. Die Absperrkörper werden von der Magnetkraft des Permanentmagnets angezogen, wenn sich dieser direkt über dem Absperrkörper befindet. Befindet sich der Permanentmagnet an einer anderen Stelle, wird der Absperrkörper entgegen der Richtung der Magnetkraft, beispielsweise mittels der Kraft einer Feder, auf die Ventildichtplatte gedrückt.

Folgende Alternativen zur oben beschriebenen bevorzugten Ausführungsform, bei der ein Permanentmagnet relativ zu den ferromagnetischen Absperrkörpern der Auf-Zu-Ventile bewegt wird, sind möglich:
- Anstelle eines einzigen Permanentmagnets sind mehrere Permanentmagnete zur Betätigung der Auf-Zu-Ventile vorgesehen;
- die Absperrkörper der Auf-Zu-Ventile sind permanentmagnetisch ausgeführt oder fest mit jeweils einem Permanentmagnet verbunden, während relativ zu den Absperrkörpern ein nicht magnetisiertes Betätigungselement aus ferromagnetischem Material bewegt wird;
- die Absperrkörper der Auf-Zu-Ventile werden nicht mittels Magnetkraft, sondern mechanisch bewegt.

Der Permanentmagnet ist vorteilhafterweise auf der den Platten abgewandten Seite der Auf-Zu-Ventile angeordnet.

Gemäß einer konstruktiven Ausführung der Erfindung ist der Permanentmagnet von der Betätigungswelle in radialer Richtung beabstandet und derart an die Betätigungswelle gekoppelt, dass ein Drehen der Betätigungswelle eine Bewegung des Permanentmagnets relativ zu den Auf-Zu-Ventilen bewirkt. Hierzu kann beispielsweise ein Knebel direkt auf die Betätigungswelle aufgesteckt sein. Ebenso ist es möglich, an der Betätigungswelle beispielsweise ein elektrisches Stellglied angreifen zu lassen.

Auf der den Absperrkörpern abgewandten Seite der Ventildichtplatte ist eine aus im Wesentlichen starrem Material, beispielsweise aus Metall ausgeführte Druckplatte angeordnet. Die Druckplatte verhindert eine unerwünschte Verformung der Ventildichtplatte und nimmt die auf die Ventildichtplatte von den Ventilkörpern ausgeübte Druckkraft auf.

Hierbei weist die Druckplatte Öffnungen auf, welche mit den Öffnungen in der Ventildichtplatte korrespondieren. Zwischen der Druckplatte und der Drosselplatte ist eine erste Gasverteilungsplatte angeordnet, welche Öffnungen aufweist, die mit den Öffnungen in der Druckplatte und mit den Drosselöffnungen in der Drosselplatte korrespondieren. Die Öffnungen in der Gasverteilungsplatte dienen dazu, jeweils zwei Drosselöffnungen miteinander zu verbinden. Darüber hinaus münden die Öffnungen in der Druckplatte jeweils in eine Öffnung der ersten Gasverteilungsplatte.

Auf der der ersten Gasverteilungsplatte abgewandten Seite der Drosselplatte ist eine zweite Gasverteilungsplatte angeordnet, welche Öffnungen aufweist, die mit den Drosselöffnungen in der Drosselplatte korrespondieren. Die zweite Gasverteilungsplatte dient ebenfalls dazu, zwei nebeneinander angeordnete Drosselöffnungen der Drosselplatte miteinander zu verbinden. Hierbei verbindet die zweite Gasverteilungsplatte jeweils zwei benachbarte Drosselöffnungen, die nicht mittels der ersten Gasverteilungsplatte verbunden sind.

Die zweite Gasverteilungsplatte und die Abdeckung bilden eine vorzugsweise trennbare Baueinheit. Die zweite Gasverteilungsplatte und die Abdeckung lassen sich für einen Austausch der Drosselplatte als Baueinheit abnehmen. Hierdurch ist die Anzahl der zu demontierenden Einzelbauteile minimiert. Ein Trennen der zweiten Gasverteilungsplatte von der Abdeckung ist möglich, aber nicht erfordelich.

Mit demselben Vorteil bilden die Ventildichtplatte und die Druckplatte und die erste Gasverteilungsplatte eine nicht trennbare Baueinheit. Die genannten Platten können beispielsweise miteinander verklebt oder aufeinander vulkanisiert sein.

Weitere Vorteile und Einzelheiten der Erfindung werden anhand der in den schematischen Figuren dargestellten Ausführungsbeispiele näher erläutert. Dabei zeigt:
- Figur 1: eine schematische Schaltanordnung der Gasventileinheit mit einem ersten geöffneten Auf-Zu-Ventil,
- Figur 2: die schematische Schaltanordnung mit zwei geöffneten Auf-Zu-Ventilen,
- Figur 3: die schematische Schaltanordnung mit dem letzten geöffneten Auf-Zu-Ventil,
- Figur 4: einen nicht erfindungsgemäßen schematischen Aufbau einer Gasventilanordnung mit geschlossenen Auf-Zu-Ventilen,
- Figur 5: den schematischen Aufbau der erfindungsgemäßen Gasventileinheit,
- Figur 6: eine Abdeckung der Gasventileinheit mit darin angeordneten Platten,
- Figur 7: eine Baueinheit aus Abdeckung und zweiter Gasverteilungsplatte,
- Figur 8: eine Drosselplatte,
- Figur 9: eine Baueinheit aus Dichtplatte, Druckplatte und erster Gasverteilungsplatte,
- Figur 10: eine Gaskochmulde mit einer erfindungsgemäßen Gasventileinheit.

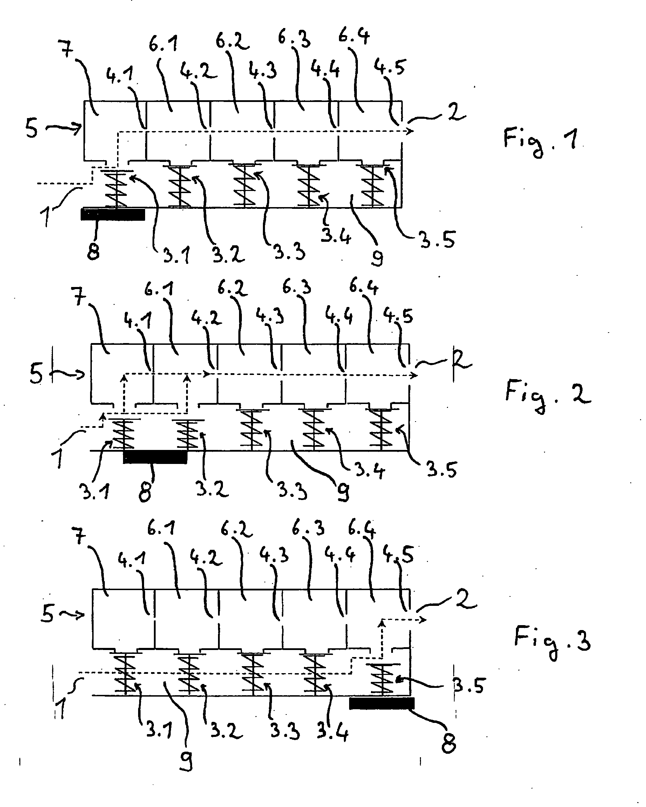

Figur 1 zeigt die Schaltanordnung der erfindungsgemäßen Gasventileinheit. Zu erkennen ist ein Gaseingang 1, mit dem die Gasventileinheit beispielsweise an eine Hauptgasleitung eines Gaskochgeräts angeschlossen ist. An dem Gaseingang 1 steht das zur Verbrennung vorgesehene Gas mit einem konstanten Druck, von beispielsweise 20 Millibar oder 50 Millibar an. An einen Gasausgang 2 der Gasventileinheit wird eine beispielsweise zu einem Gasbrenner des Gaskochgeräts führende Gasleitung angeschlossen. Der Gaseingang 1 ist über einen Gaseingangsraum 9 der Gasventileinheit mit der Eingangsseite der im vorliegenden Ausführungsbeispiel fünf Auf-Zu-Ventile 3 (3.1 bis 3.5) verbunden. Durch Öffnen der Auf-Zu-Ventile 3 ist der Gaseingang 1 jeweils mit einem bestimmten Abschnitt einer Drosselstrecke 5 verbunden, in den das Gas über das geöffnete Auf-Zu-Ventil 3 einströmt. Die Drosselstrecke 5 umfasst einen Eingangsabschnitt 7, in den das erste Auf-Zu-Ventil 3.1 mündet. Die weiteren Auf-Zu-Ventile 3.2 bis 3.5 münden jeweils in einen Verbindungsabschnitt 6 (6.1 bis 6.4) der Drosselstrecke 5. Der Übergang zwischen dem Eingangsabschnitt 7 und dem ersten Verbindungsabschnitt 6.1, sowie die Übergänge zwischen zwei benachbarten der Verbindungsabschnitte 6.1 bis 6.4 ist jeweils von einer Drosselstelle 4 (4.1 bis 4.5) gebildet. Die letzte Drosselstelle 4.5 verbindet den letzten Verbindungsabschnitt 6.4 mit dem Gasausgang 2. Die Drosselstellen 4.1 bis 4.5 besitzen einen der Reihe nach zunehmendem Öffnungsquerschnitt. Der Durchflussquerschnitt der letzten Drosselstelle 4.5 kann so groß gewählt sein, dass die letzte Drosselstelle 4.5 praktisch keine Drosselfunktion besitzt.

Die Betätigung der Auf-Zu-Ventile 3 erfolgt mittels eines Permanentmagnets 8, der entlang der Reihe der Auf-Zu-Ventile 3 verschiebbar ist. Die Kraft zum Öffnen des jeweiligen Auf-Zu-Ventils 3 wird dabei direkt von der Magnetkraft des Permanentmagnets 8 gebildet. Diese Magnetkraft öffnet das jeweilige Auf-Zu-Ventil 3 entgegen einer Federkraft.

In der Schaltstellung gemäß Figur 1 ist ausschließlich das erste Auf-Zu-Ventil 3.1 geöffnet. Durch dieses Auf-Zu-Ventil 3.1 strömt das Gas von dem Gaseingangsraum 9 in den Eingangsabschnitt 7 und passiert von dort aus auf dem Weg zum Gasausgang 2 sämtliche Drosselstellen 4 und sämtliche Verbindungsabschnitte 6. Die Menge des durch die Ventileinheit strömenden Gases gibt die Minimalleistung des an die Gasventileinheit angeschlossenen Gasbrenners vor.

Figur 2 zeigt die schematische Schaltanordnung, bei der der Permanentmagnet 8 derart nach in der Zeichnung rechts verschoben ist, dass sowohl das erste Auf-Zu-Ventil 3.1 als auch das zweite Auf-Zu-Ventil 3.2 geöffnet sind.

Durch das geöffnete zweite Auf-Zu-Ventil 3.2 strömt das Gas von dem Gaseingangsraum 9 direkt in den ersten Verbindungsabschnitt 6.1 und von dort über die Drosselstellen 4.2 bis 4.5 zum Gasausgang 2. Das zum Gasausgang 2 strömende Gas umgeht aufgrund des geöffneten Auf-Zu-Ventils 3.2 die erste Drosselstelle 4.1. Der Gasvolumenstrom in der Schaltstellung gemäß Figur 2 ist deshalb größer als der Gasvolumenstrom in der Schaltstellung gemäß Figur 1. Der Gaszufluss zu dem ersten Verbindungsabschnitt 6.1 erfolgt praktisch ausschließlich über das zweite Auf-Zu-Ventil 3.2. Aufgrund der offen stehenden Auf-Zu-Ventile 3.1 und 3.2 herrscht in dem Eingangsabschnitt 7 dasselbe Druckniveau wie in dem ersten Verbindungsabschnitt 6.1. Aus dem Eingangsabschnitt 7 strömt über die erste Drosselstelle 4.1 deshalb so gut wie kein Gas in den ersten Verbindungsabschnitt 6.1 nach. Der insgesamt durch die Gasventileinheit strömende Gasvolumenstrom ändert sich daher praktisch nicht, wenn der Permanentmagnet 8 weiter nach in der Zeichnung rechts bewegt wird und dadurch das erste Auf-Zu-Ventil 3.1 bei geöffnetem zweiten Auf-Zu-Ventil 3.2 geschlossen wird.

Durch Bewegen des Permanentmagnets 8 nach in der Zeichnung rechts werden die Auf-Zu-Ventile 3.3. bis 3.5 sukzessive geöffnet und dadurch der Gasvolumenstrom durch die Gasventileinheit schrittweise erhöht.

Figur 3 zeigt die schematische Schaltanordnung der Gasventileinheit in maximal geöffneter Stellung. Hierbei befindet sich der Permanentmagnet 8 in seiner Endstellung auf der in der Zeichnung rechten Seite. Das letzte Auf-Zu-Ventil 3.5 ist bei dieser Position des Permanentmagnets 8 geöffnet. Gas strömt hierbei direkt aus dem Gaseingangsraum 9 in den letzten Verbindungsabschnitt 6.4 und passiert auf dem Weg zum Gasausgang 2 ausschließlich die letzte Drosselstelle 4.5. Diese letzte Drosselstelle 4.5 kann einen derart großen Durchflussquerschnitt aufweisen, dass praktisch keine Drosselung des Gasstroms eintritt und das Gas die Gasventileinheit praktisch ungedrosselt durchströmen kann.

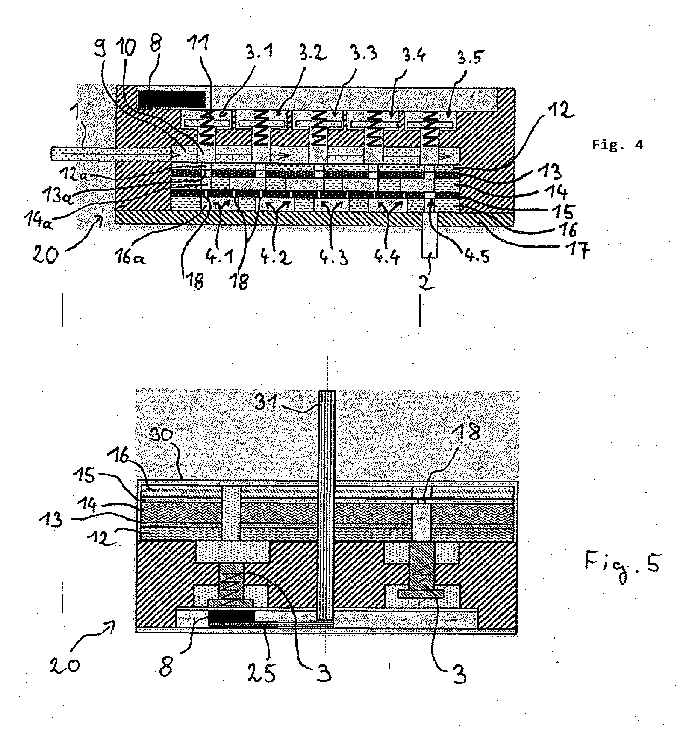

Figur 4 zeigt schematisch einen nicht erfindungsgemäßen konstruktiven Aufbau einer Gasventileinheit mit einer Schaltanordnung gemäß Figur 1 bis 3. Zu erkennen ist ein Ventilkörper 20, in dem der Gaseingang 1 der Gasventileinheit ausgeführt ist. Im Inneren des Ventilkörpers 20 befindet sich ein mit dem Gaseingang 1 verbundener Gaseingangsraum 9. Absperrkörper 10 der Auf-Zu-Ventile 3 sind in dem Ventilkörper 20 geführt, derart, dass sie sich in der Zeichnung nach oben und unten bewegen können. Jeder Absperrkörper 10 ist mittels einer Feder 11 nach in der Zeichnung unten vorgespannt. Mittels der Kraft des Permanentmagnets 8 kann jeder Absperrkörper 10 entgegen der Kraft der Feder 11 nach in der Zeichnung oben bewegt werden. Die Federn 11 drücken die Absperrkörper auf eine Ventildichtplatte 12, so dass die Absperrkörper 10 in der Ventildichtplatte 12 vorhandene Öffnungen 12a gasdicht verschließen. Unterhalb der Ventildichtplatte 12 ist eine Druckplatte 13 angeordnet, mit Öffnungen 13a, die mit den Öffnungen 12a in der Ventildichtplatte 12 korrespondieren. Die Öffnungen 13a in der Druckplatte 13 münden in Öffnungen 14a in eine erste Gasverteilungsplatte 14. In der Zeichnung unterhalb der ersten Gasverteilungsplatte 14 befindet sich eine Drosselplatte 15 mit einer Vielzahl von Drosselöffnungen 18. Jede der Drosselstellen 4.1 bis 4.4 wird dabei von zwei Drosselöffnungen 18 gebildet. Die zwei zu einer Drosselstelle 4.1 bis 4.4 gehörenden Drosselöffnungen 18 sind jeweils mittels der Öffnungen 16a in einer zweiten Gasverteilungsplatte 16 miteinander verbunden. Die Öffnungen 14a in der ersten Gasverteilungsplatte verbinden hingegen die nebeneinander liegenden Drosselöffnungen 18 zweier benachbarter Drosselstellen 4.1 bis 4.5. Die letzte Drosselstelle 4.5 besteht aus nur einer Drosselöffnung 18, welche über eine korrespondierende Öffnung 16a in der zweiten Gasverteilungsplatte 16 in den Gasausgang 2 der Gasventileinheit mündet.

Bei der Schaltstellung gemäß Figur 4 befindet sich der Permanentmagnet 8 in einer Endposition, in der alle Auf-Zu-Ventile 3 geschlossen sind. Die Gasventileinheit ist damit insgesamt geschlossen. Der Gasvolumenstrom ist gleich null. Ausgehend von dieser Schaltstellung wird der Permanentmagnet 8 nach in der Zeichnung rechts bewegt, wodurch jeweils die unter dem Permanentmagnet 8 angeordneten Auf-Zu-Ventile 3 geöffnet werden.

Bei der Anordnung gemäß Figur 4 befindet sich der von der Bedienperson der Gasventileinheit bewegbare Permanentmagnet 8 auf der Oberseite der Gasventileinheit. Die Drosselplatte 15 ist nach Abnehmen einer Abschlussplatte 17 von unten zugänglich. Wenn die Gasventileinheit in einer Gaskochstelle eingebaut ist erfordert dies, dass die Unterseite der Gaskochstelle zugänglich sein muss und die Gaskochstelle an ihrer Unterseite Zugangsöffnungen aufweisen muss.

Figur 5 zeigt den schematischen Aufbau der erfindungsgemäßen Gasventilanordnung. Zu erkennen ist der im Wesentlichen rotationssymmetrische Ventilkörper 20 mit einer zentral angeordneten Betätigungswelle 31. Die beispielsweise fünf Auf-Zu-Ventile 3 sind entlang eines Kreisbogens um die Betätigungswelle 31 angeordnet. An der Betätigungswelle 31 ist drehfest ein Mitnehmer 25 befestigt, an dessen äußerem Ende der Permanentmagnet 8 angeordnet ist. Bei einem Drehen der Bestätigungswelle 31 bewegt sich der Permanentmagnet 8 entlang eines Kreisbogens an den Auf-Zu-Ventilen 3 vorbei. Jeweils die Auf-Zu-Ventile 3, die sich direkt über dem Permanentmagnet 8 befinden, werden durch die Magnetkraft des Permanentmagnets 8 geöffnet. Oben auf die Betätigungswelle 31 kann beispielsweise ein von der Bedienperson direkt greifbarer Drehknebel aufgesteckt sein. Alternativ kann an die Betätigungswelle 31 auch ein beispielsweise elektromotorisches Stellglied gekoppelt sein.

An der Oberseite des Ventilkörpers ist eine Abdeckung 30 ausgebildet, in der, von unten nach oben, die Ventildichtplatte 12, die Druckplatte 13, die erste Gasverteilungsplatte 14, die Drosselplatte 15 und die zweite Gasverteilungsplatte 16 angeordnet sind. Die Platten 12 bis 16 sind durch Abnehmen der Abdeckung 30 zugänglich. Erfindungsgemäß erfolgt der Zugang zu den Platten 12 bis 16 von oben, d. h. von derselben Seite, aus der die Betätigungswelle 31 aus dem Ventilkörper 20 ragt.

Zur Anpassung der Gasventileinheit an eine andere Gasart ist insbesondere die Drosselplatte 15 auszutauschen. In der Drosselplatte 15 befinden sich die Drosselöffnungen 18, welche die Größe des Gasvolumenstroms maßgeblich festlegen. Nach einem Abnehmen der Abdeckung nach oben befinden sich alle Platten 12 bis 16 in der Abdeckung 30.

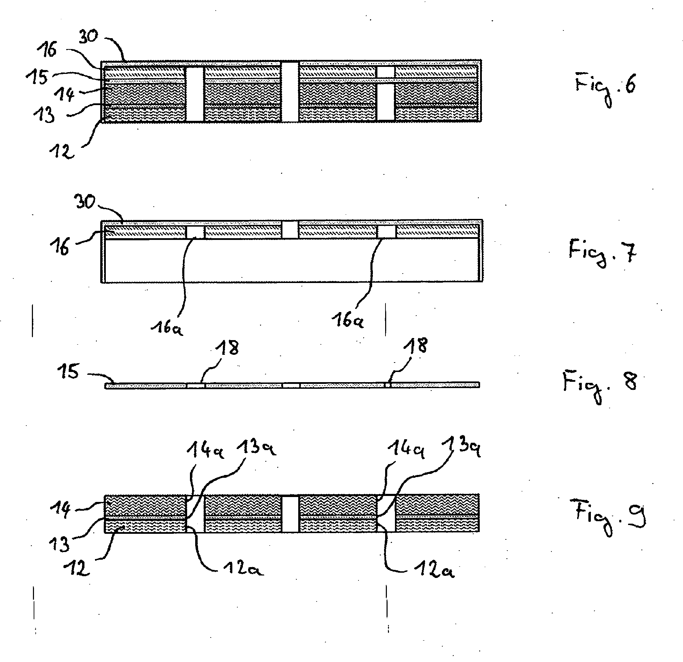

Diese Einheit aus Abdeckung 30 und Platten 12 bis 16 ist in Figur 6 dargestellt. Aus der Abdeckung 30 können dann die Platten 12 bis 15 entnommen werden.

Figur 7 zeigt die in die Abdeckung 30 integrierte obere Gasverteilungsplatte 16, welche mit der Abdeckung 30 eine trennbare Baueinheit bildet.

Figur 8 zeigt die Drosselplatte 15, die für sich genommen und einzeln austauschbar ist.

Figur 9 zeigt eine Einheit aus Ventildichtplatte 12, Druckplatte 13 und erster Gasverteilungsplatte 14, welche miteinander zu einer Verbundplatte verbunden sind. Ein korrektes Einsetzen dieser Platten 12 bis 14 ist hierdurch erleichtert.

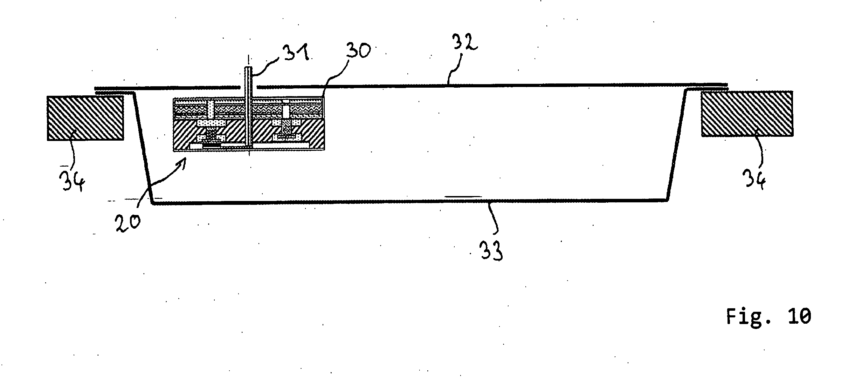

In Figur 10 ist der schematische Aufbau einer Gaskochmulde mit einer erfindungsgemäßen Gasventileinheit gezeigt. Die Gaskochmulde besitzt ein Muldengehäuse 33, welche in einen Ausschnitt einer Arbeitsplatte 34 einer Küche eingesetzt ist. Nach oben ist das Muldengehäuse 33 durch eine Abdeckplatte 32 verschlossen. Die Abdeckplatte kann beispielsweise aus Edelstahl, aus Glaskeramik oder aus Hartglas ausgeführt sein. Die erfindungsgemäße Gasventileinheit befindet sich im Inneren der Gaskochmulde. Die Betätigungswelle 31 der Gasventileinheit ragt nach oben durch eine Öffnung der Abdeckplatte 32 hindurch.

Zum Austausch der Drosselplatte 15 wird die Abdeckplatte 32 der Gaskochmulde nach oben abgenommen. Anschließend kann die Abdeckung 30 des Ventilskörpers 20 ebenfalls nach oben entfernt werden.

Mit dieser Anordnung kann das Muldengehäuse nach unten vollständig geschlossen ausgeführt sein. Die nicht dargestellten, an die Gasventileinheit angeschlossenen Gasleitungen müssen für einen Austausch der Drosselplatte 15 nicht demontiert werden.

### BEZUGSZEICHENLISTE

- 1: Gaseingang
- 2: Gasausgang
- 3 (3.1 bis 3.5): Auf-Zu-Ventile
- 4 (4.1 bis 4.5): Drosselstellen
- 5: Drosselstrecke
- 6 (6.1 bis 6.4): Verbindungsabschnitt
- 7: Eingangsabschnitt
- 8: Permanentmagnet
- 9: Gaseingangsraum
- 10: Absperrkörper
- 11: Feder
- 12: Ventildichtplatte
- 12a: Öffnungen
- 13: Druckplatte
- 13a: Öffnungen
- 14: erste Gasverteilungsplatte
- 14a: Öffnungen
- 15: Drosselplatte
- 16: zweite Gasverteilungsplatte
- 16a: Öffnungen
- 17: Abschlussplatte
- 18.: Drosselöffnungen
- 20.: Ventilkörper
- 25: Mitnehmer
- 30: Abdeckung
- 31: Betätigungswelle
- 32: Abdeckplatte
- 33: Muldengehäuse
- 34: Arbeitsplatte

## Patentansprüche

1. Gasventileinheit zum Einstellen eines einem Gasbrenner eines Gasgeräts zugeführten Gasvolumenstroms, wobei die Gasventileinheit einen Ventilkörper (20) und eine aus dem Ventilkörper (20) herausstehende Betätigungswelle (31) aufweist, in welchem Ventilkörper (20) mindestens zwei Auf-Zu-Ventile (3) der Gasventileinheit ausgebildet sind, und in welchem Ventilkörper (20) mindestens zwei Drosselstellen (4) mit jeweils mindestens einer Drosselöffnung (18) ausgebildet sind, wobei der Ventilkörper (20) mindestens eine Drosselplatte (15) aufweist, in der die Drosselöffnungen (18) der Drosselstellen (4) angeordnet sind, und die Drosselplatte (15) von der Seite des Ventilkörpers (20) aus, auf der die Betätigungswelle (31) aus dem Ventilkörper (20) heraus steht, zugänglich ist, dadurch gekennzeichneit, dass der Ventilkörper (20) mehrere parallel zueinander angeordnete Platten (12, 13, 14, 15, 16) aufweist, eine der Platten von der Drosselplatte (15) gebildet ist, und eine der Platten von einer Ventildichtplatte (12) gebildet ist, welche die Ventilsitze der Auf-Zu-Ventile (3) bildet.

2. Gasventileinheit nach Anspruch 1, **dadurch gekennzeichnet, dass** die Drosselplatte (15) austauschbar ist.

3. Gasventileinheit nach Anspruch 1 oder 2, **dadurch gekennzeichnet, dass** der Ventilkörper (20) auf der Seite des Ventilkörpers (20), auf der die Betätigungswelle aus dem Ventilkörper (20) heraus steht, eine Abdeckung (30) aufweist, und die Drosselplatte (15) durch Entfernen der Abdeckung (30) zugänglich ist.

4. Gasventileinheit nach einem der Ansprüche 1 - 3, **dadurch gekennzeichnet, dass** die Ventildichtplatte (12) aus einem flexiblen Material ausgeführt ist.

5. Gasventileinheit nach einem der Ansprüche 1- 4, **dadurch gekennzeichnet, dass** die Ventildichtplatte (12) im Bereich jedes Ventilsitzes eine Öffnung (12a) aufweist, welche bei geschlossenem Auf-Zu-Ventil (3) mittels eines auf der Ventildichtplatte (12) aufsitzenden Absperrkörpers (10) des Auf-Zu-Ventils (3) verschlossen ist.

6. Gasventileinheit nach einem der Ansprüche 1 bis 6, **gekennzeichnet durch** einen Permanentmagnet (8) zum Betätigen der Auf-Zu-Ventile (3).

7. Gasventileinheit nach Anspruch 6, **dadurch gekennzeichnet, dass** der Permanentmagnet (8) dazu eingerichtet ist, die Absperrkörper (10) der Auf-Zu-Ventile (3) zu bewegen.

8. Gasventileinheit nach Anspruch 6 oder 7, **dadurch gekennzeichnet, dass** der Permanentmagnet (8) auf der den Platten (12, 13, 14, 15, 16) abgewandten Seite der Auf-Zu-Ventile (3) angeordnet ist.

9. Gasventileinheit nach einem der Ansprüche 6 - 8; **dadurch gekennzeichnet, dass** der Permanentmagnet (8) von der Betätigungswelle (31) in radialer Richtung beabstandet ist und derart an die Betätigungswelle (31) gekoppelt ist, dass ein Drehen der Betätigungswelle (31) eine Bewegung des Permanentmagnets (8) relativ zu den Auf-Zu-Ventilen (3) bewirkt.

10. Gasventileinheit nach einem der Ansprüche 5 bis 9, **dadurch gekennzeichnet, dass** auf der den Absperrkörpern (10) abgewandten Seite der Ventildichtplatte (12) eine aus im Wesentlichen starrem Material ausgeführte Druckplatte (13) angeordnet ist.

11. Gasventileinheit nach Anspruch 10, **dadurch gekennzeichnet, dass** die Druckplatte (13) Öffnungen (13a) aufweist, welche mit den Öffnungen (12a) in der Ventildichtplatte (12) korrespondieren.

12. Gasventileinheit nach Anspruch 10 oder 11, **dadurch gekennzeichnet, dass** zwischen der Druckplatte (13) und der Drosselplatte (15) eine erste Gasverteilungsplatte (14) angeordnet ist, welche Öffnungen (14a) aufweist, die mit den Öffnungen (13a) in der Druckplatte (13) und mit den Drosselöffnungen (18) in der Drosselplatte (15) korrespondieren.

13. Gasventileinheit nach Anspruch 12, **dadurch gekennzeichnet, dass** auf der der ersten Gasverteilungsplatte (14) abgewandten Seite der Drosselplatte (15) eine zweite Gasverteilungsplatte (16) angeordnet ist, welche Öffnungen (16a) aufweist, die mit den Drosselöffnungen (18) in der Drosselplatte (15) korrespondieren.

14. Gasventileinheit nach Anspruch 13, **dadurch gekennzeichnet, dass** die zweite Gasverteilungsplatte (16) und die Abdeckung (30) eine trennbare Baueinheit bilden.

15. Gasventileinheit nach einem der Ansprüche 12 bis 14, **dadurch gekennzeichnet, dass** die Ventildichtplatte (12) und die Druckplatte (13) und die erste Gasverteilungsplatte (14) eine nicht trennbare Baueinheit bilden.

## Claims

1. Gas valve unit for adjusting a gas volume flow supplied to a gas burner of a gas device, wherein the gas valve unit comprises a valve body (20) and an actuation shaft (31) projecting out of the valve body (20), in which valve body (20) at least two open/close valves (3) of the gas valve unit are embodied, and in which valve body (20) at least two restrictions (4) are embodied with in each case at least one throttle opening (18), wherein the valve body (20) comprises at least one throttle plate (15), in which the throttle openings (18) of the restrictions (4) are arranged, and the throttle plate (15) is accessible from the side of the valve body (20), on which the actuation shaft (31) projects out of the valve body (20), **characterised in that** the valve body (20) comprises several plates (12, 13, 14, 15, 16) which are arranged in parallel to one another, one of the plates is formed by the throttle plate (15) and one of the plates is formed by a valve sealing plate (12), which forms the valve seats of the open/close valves (3).

2. Gas valve unit according to claim 1, **characterised in that** the throttle plate (15) can be replaced.

3. Gas valve unit according to claim 1 or 2, **characterised in that** the valve body (20) comprises a cover (30) on the side of the valve body (20) on which the actuation shaft projects out of the valve body (20), and the throttle plate (15) is accessible by removing the cover (30).

4. Gas valve unit according to one of claims 1 - 3, **characterised in that** the valve sealing plate (12) is implemented from a flexible material.

5. Gas valve unit according to one of claims 1 - 4, **characterised in that** the valve sealing plate (12) comprises an opening (12a) in the region of each valve seat, said opening, when the open/close valve (3) is closed, being sealed by means of a stop element (10) of the open/close valve (3) which is resting on the valve sealing plate (12).

6. Gas valve unit according to one of claims 1 - 6, **characterised by** a permanent magnet (8) for actuating the open/close valves (3).

7. Gas valve unit according to claim 6, **characterised in that** the permanent magnet (8) is to move the stop element (10) of the open/close valves (3).

8. Gas valve unit according to claim 6 or 7, **characterised in that** the permanent magnet (8) is arranged on the side of the open/close valves (3) which faces away from the plates (12, 13, 14, 15, 16).

9. Gas valve unit according to one of claims 6 - 8, **characterised in that** the permanent magnet (8) is distanced from the actuation shaft (31) in the radial direction and is coupled to the permanent magnet (8) relative to the open/close valves (3)

10. Gas valve unit according to one of claims 5 to 9, **characterised in that** the pressure plate (13) implemented from substantially rigid material is arranged on the side of the valve sealing plate (12) facing away from the stop elements (10).

11. Gas valve unit according to claim 10, **characterised in that** the pressure plate (13) has openings (13a) which correspond to the openings (12a) in the valve sealing plate (12).

12. Gas valve unit according to claim 10 or 11, **characterised in that** a first gas distribution plate (14) is arranged between the pressure plate (13) and the throttle plate (15), said first gas distribution plate (14) comprising openings (14a) which correspond to the openings (13a) in the pressure plate (13) and the throttle openings (18) in the throttle plate (15).

13. Gas valve unit according to claim 12, **characterised in that** the second gas distribution plate (16) is arranged on the side of the throttle plate (15) facing away from the first gas distribution plate (14), said gas distribution plate (16) having openings (16a) which correspond to the throttle openings (18) in the throttle plate (15).

14. Gas valve unit according to claim 13, **characterised in that** the second gas distribution plate (16) and the cover (30) form a separable unit.

15. Gas valve unit according to one of claims 12 to 14, **characterised in that** the valve sealing plate (12) and the pressure plate (13) and the first gas distribution plate (14) form a non separable unit.

## Revendications

1. Ensemble de vannes à gaz pour régler un flux volumique de gaz amené à un brûleur à gaz d'un appareil à gaz, ledit ensemble de vannes à gaz présentant un corps de vanne (20) et un arbre d'actionnement (31) dépassant du corps de vanne (20), dans lequel corps de vanne (20) sont réalisées au moins deux vannes tout ou rien (3) de l'ensemble de vannes à gaz, et dans lequel corps de vanne (20) sont formés au moins deux points d'étranglement (4) comportant chacun au moins un orifice d'étranglement (18), le corps de vanne (20) présentant au moins une plaque d'étranglement (15) dans laquelle sont ménagés les orifices d'étranglement (18) des points d'étranglement (4), et la plaque d'étranglement (15) étant accessible depuis le côté du corps de vanne (20), sur lequel l'arbre d'actionnement (31) dépasse du corps de vanne (20),
**caractérisé en ce que** le corps de vanne (20) présente plusieurs plaques (12, 13, 14, 15, 16) disposés parallèlement les unes aux autres, qu'une des plaques est formée par la plaque d'étranglement (15) et qu'une des plaques est formée par une plaque d'étanchéité des vannes (12) formant les sièges des vannes tout ou rien (3).

2. Ensemble de vannes à gaz selon la revendication 1, **caractérisé en ce que** la plaque d'étranglement (15) est interchangeable.

3. Ensemble de vannes à gaz selon la revendication 1 ou 2, **caractérisé en ce que** le corps de vanne (20) présente sur son côté sur lequel l'arbre d'actionnement dépasse du corps de vanne (20), un couvercle (30), et que la plaque d'étrangement (15) est accessible en enlevant le couvercle (30).

4. Ensemble de vannes à gaz selon l'une des revendications 1 - 3, **caractérisé en ce que** la plaque d'étanchéité des vannes (12) est réalisée en un matériau flexible.

5. Ensemble de vannes à gaz selon l'une des revendications 1 - 4, **caractérisé en ce que** la plaque d'étanchéité des vannes (12) comporte au niveau de chaque siège de vanne une ouverture (12a) qui, lorsque la vanne tout ou rien (3) est fermée, est obturée au moyen d'un obturateur (10) de la vanne tout ou rien (3) placé sur la plaque d'étanchéité des vannes (12).

6. Ensemble de vannes à gaz selon l'une des revendications 1 à 5, **caractérisé par** un aimant permanent (8) servant à actionner les vannes tout ou rien (3).

7. Ensemble de vannes à gaz selon la revendication 6, **caractérisé en ce que** l'aimant permanent (8) est adapté pour déplacer les obturateurs (10) des vannes tout ou rien (3).

8. Ensemble de vannes à gaz selon la revendication 6 ou 7, **caractérisé en ce que** l'aimant permanent (8) est disposé sur le côté opposé aux plaques (12, 13, 14, 15) des vannes tout ou rien (3).

9. Ensemble de vannes à gaz selon l'une des revendications 6 - 8, **caractérisé en ce que** l'aimant permanent (8) est espacé de l'arbre d'actionnement (31) dans le sens radial et est couplé à l'arbre d'actionnement (31) de telle sorte qu'une rotation de l'arbre d'actionnement (31) induit un mouvement de l'aimant permanent (8) par rapport aux vannes tout ou rien (3).

10. Ensemble de vannes à gaz selon l'une des revendications 5 à 9, **caractérisé en ce que** sur le côté opposé aux obturateurs (10) de la plaque d'étanchéité des vannes (12), est placée une plaque de pression (13) réalisé en matériau substantiellement rigide.

11. Ensemble de vannes à gaz selon la revendication 10, **caractérisé en ce que** la plaque de pression (13) comporte des ouvertures (13a) qui correspondent avec les ouvertures (12a) dans la plaque d'étanchéité des vannes (12).

12. Ensemble de vannes à gaz selon la revendication 10 ou 11, **caractérisé en ce qu'**entre la plaque de pression (13) et la plaque d'étranglement (15), est placée une première plaque de distribution de gaz (14) comportant des ouvertures (14a) qui correspondent avec les ouvertures (13a) dans la plaque de pression (13) et avec les ouvertures d'étranglement (18) dans la plaque d'étranglement (15).

13. Ensemble de vannes à gaz selon la revendication 12, **caractérisé en ce que** sur le côté opposé à la première plaque de distribution de gaz (14) de la plaque d'étranglement (15), est placée une seconde plaque de distribution de gaz (16) comportant des ouvertures (16a) qui correspondent avec les ouvertures d'étranglement (18) dans la plaque d'étranglement (15).

14. Ensemble de vannes à gaz selon la revendication 13, **caractérisé en ce que** la seconde plaque de distribution de gaz (16) et le couvercle (30) forment un ensemble de construction séparable.

15. Ensemble de vannes à gaz selon l'une des revendications 12 à 14, **caractérisé en ce que** la plaque d'étanchéité des vannes (12) et la plaque de pression (13) et la première plaque de distribution de gaz (14) forment un ensemble de construction non séparable.
